# EUROPEAN PATENT APPLICATION

(11) **EP 4 109 024 A1**
(43) Date of publication of application: **28.12.2022**
(21) Application number: 22179471.2
(22) Date of filing: 16.06.2022
(51) Int. Cl.: F28D 19/04, F24F 12/00

(54) **INTEGRAL ENERGY RECOVERY VENTILATOR WITH BYPASS BY ROTATION FOR ROOFTOPS**

(30) Priority: 25.06.2021 US 202117358549
(71) Applicant: Carrier Corporation, Palm Beach Gardens, FL 33418 (US)
(72) Inventor: TOZER, Renee, Liverpool, 13090 (US)
(74) Representative: Dehns

(57) **Abstract**

A rooftop air conditioning unit (100) includes a cabinet (114), an energy recovery wheel (122) rotatably mounted within the cabinet, and a controller. The energy recovery wheel can transfer heat between an outdoor air stream and a return air stream when rotated into an operational position and will not transfer heat when rotated into a bypass position. The controller can select the operational position of the energy recovery wheel and an operational mode of the energy recovery wheel.

## Description

The present description relates generally to rooftop air conditioning (AC) units, and more particularly to an energy recovery ventilator (ERV) system for a rooftop AC unit.

There is a need to recover energy from the conditioned air leaving the building (whether it be heating or cooling), for example, via the rooftop AC unit. However, conventional rooftop AC units may lack the space necessary to incorporate ERV systems. This makes traditional retrofits difficult and may require the movement or resizing of various components or other layout changes.

According to one aspect of the invention, a rooftop AC unit includes a cabinet, an energy recovery wheel which is rotatably mounted within the cabinet, and a controller. The energy recovery wheel is configured to transfer heat between an outdoor air stream and a return air stream when rotated into an operational position and is further configured not to transfer heat between the outdoor air stream and the return air stream when rotated into a bypass position. The controller is configured to select the operational position of the energy recovery wheel and an operational mode of the energy recovery wheel.

According to another aspect of the invention, an ERV system for a rooftop AC unit includes an energy recovery wheel which is rotatably mounted within the cabinet and a controller. The rooftop AC unit includes a cabinet. The energy recovery wheel is configured to transfer heat between an outdoor air stream and a return air stream when rotated into an operational position and is further configured not to transfer heat between the outdoor air stream and the return air stream when rotated into a bypass position. The controller is configured to select the operational position of the energy recovery wheel and an operational mode of the energy recovery wheel.

According to yet another aspect of the invention, a method of operating a rooftop AC unit which includes an ERV system includes configuring a plurality of dampers to direct a flow of outdoor air and a flow of return air through the ERV system. A controller selects an operational mode of an energy recovery wheel. The energy recovery wheel rotates about a positional axis of rotation to position the energy recovery wheel in both an outdoor air path and a return air path to facilitate exchanging heat between an outdoor air stream and a return air stream. The positional axis of rotation is orthogonal to an operational axis of rotation. A supply fan draws a mix of outdoor air and return air through the energy recovery ventilator system. The energy recovery wheel rotates about the operational axis of rotation within a cabinet to exchange heat between the outdoor air stream and the return air stream.

Certain exemplary embodiments will now be described in greater detail by way of example only and with reference to the accompanying drawings in which:
FIG. 1A is a cross-sectional view of a prior art rooftop AC unit.
FIG. 1B is a cross-sectional view of a modified rooftop AC unit including an energy recovery ventilator (ERV) system.
FIG. 2A is a front perspective view of an energy recovery wheel.
FIG. 2B is a side perspective view of the energy recovery wheel of FIG. 2A showing a partially-removed cassette.
FIG. 3 is a schematic illustration of an ERV system including the energy recovery wheel of FIG. 2A within the modified rooftop AC unit of FIG. 1B.
FIG. 4 is a schematic illustration of the ERV system of FIG. 3 in an energy recovery mode.
FIG. 5 is a schematic illustration of the ERV system of FIG. 3 when the modified rooftop AC unit of FIG. 1B is in a mixed air mode.
FIG. 6 is a schematic illustration of the ERV system of FIG. 3 when the modified rooftop AC unit of FIG. 1B is in an outdoor air mode.
FIG. 7 is a schematic illustration of the ERV system of FIG. 3 when the modified rooftop AC unit of FIG. 1B is in a return air mode.

An energy recovery wheel is included within a cabinet of a rooftop AC system which has been modified to include streamlined components. The energy recovery wheel is rotatable about two axes and is integral to the modified rooftop AC unit. The energy recovery wheel is placed between separated air streams and can be rotated out of the way when not in use while still maintaining air stream separation.

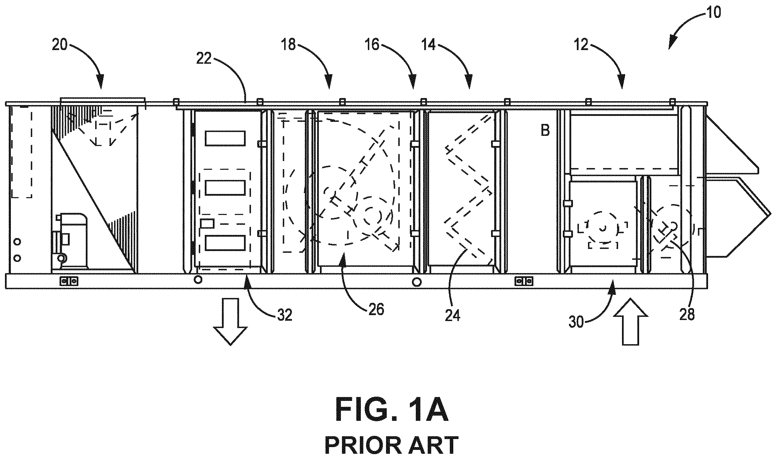

FIG. 1A is a cross-sectional view of exemplary prior art AC unit 10. As shown, prior art AC unit 10 is a rooftop AC unit which can include exhaust section 12, filter section 14, evaporative coil section 16, supply/heating section 18, and condensing section 20. Prior art AC unit 10 can include components such as cabinet 22, filters 24, supply fan 26, and exhaust fan 28. Cabinet 22 can include return inlet 30 and supply inlet 32.

Exhaust section 12 can be located upstream of filter section 14, evaporative coil section 16, and supply/heating section 18 with respect to airflow through prior art AC unit 10. Condensing section 20 can be located adjacent to supply/heating section 18 such that supply/heating section 18 is located between evaporative coil section 16 and condensing section 20. Cabinet 22 is a housing which surrounds the other components of prior art AC unit 10. Filters 24 can be located within filter section 14. Supply fan 26 can be located downstream of exhaust fan 28 with respect to the flow of outdoor air through cabinet 22. Filters 24 can be located upstream of supply fan 26. Exhaust fan 28 can be located upstream of supply fan 26 and filters 24, such that filters 24 are located between exhaust fan 28 and supply fan 26. During operation, return air can enter cabinet 22 at return inlet 30 within exhaust section 12. Return air can flow through filter section 14, evaporative coil section 16, and supply/heating section 18 and exit cabinet 22 at supply inlet 32 as reconditioned supply air.

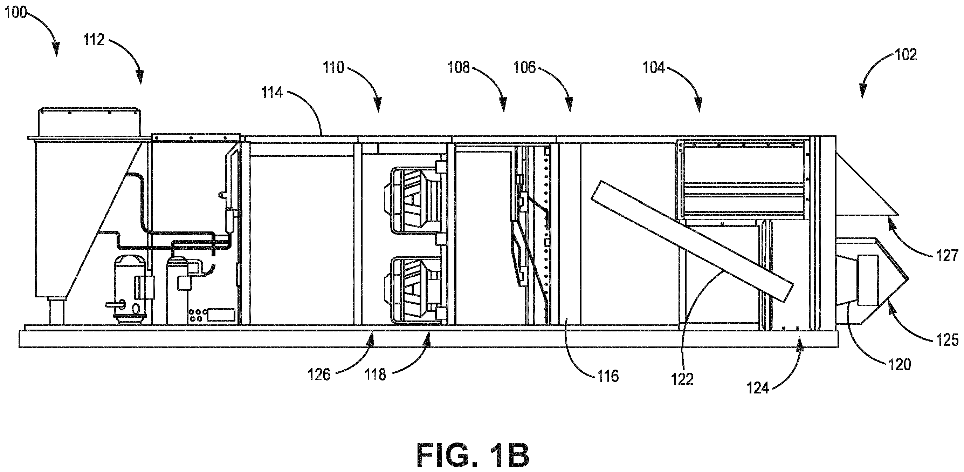

In the depicted example, supply fan 26 draws supply air through cabinet 22. Supply fan 26 can draw outdoor air in through prior art AC unit 10. Filters 24 can filter return air flowing through filter section 14. Exhaust fan 28 can draw return air into and through cabinet 22. Exhaust fan 28 can discharge return air outside of the building. During operation, prior art AC unit 10 provides ventilation to a building, and can additionally provide heating and/or cooling. A number of dampers (not shown in FIG. 1) within cabinet 22 can be configurable to select airflow source and flow rate for prior art AC unit 10.

FIG. 1B is a cross-sectional view of exemplary modified AC unit 100. Modified AC unit 100 is a rooftop AC unit which can include exhaust section 102, energy recovery section 104, filter section 106, evaporative coil section 108, supply/heating section 110, and condensing section 112. Modified AC unit 100 can include components such as cabinet 114, filters 116, supply fan 118, exhaust fan 120, and energy recovery wheel 122. Cabinet 114 can include return inlet 124, return outlet 125, supply outlet 126, and supply inlet 127.

Modified AC unit 100 can operate in substantially the same way as prior art AC unit 10 with respect to ventilation. Exhaust fan 120 can be positioned at an end of cabinet 114 and oriented parallel to the cross section shown in FIG. 1B with respect to an axis of rotation of exhaust fan 120.

In comparison to prior art AC unit 10 described above, certain components of modified AC unit 100 can be resized or moved. With respect to the location of filters 24 within prior art AC unit 10, filters 116 of modified AC unit 100 have been rotated 90 degrees to create room within cabinet 114. With respect to the size and location of exhaust fan 28 within prior art AC unit 10, exhaust fan 120 of modified AC unit 100 has been moved to an end of cabinet 114 and has been flattened. These modifications provide space for energy recovery section 104 within cabinet 114 while allowing cabinet 114 to be the same size as cabinet 22. As discussed in more detail below, energy recovery wheel 122 allows modified AC to transfer heat energy between the outdoor air and the return air.

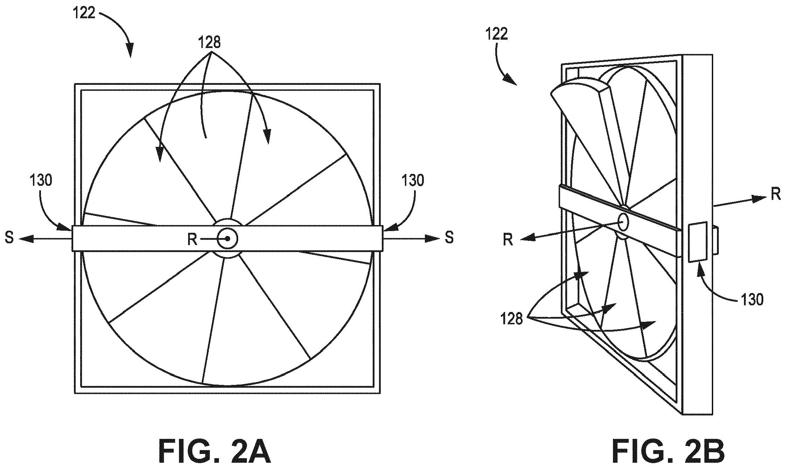

FIG. 2A is a front perspective view of exemplary energy recovery wheel 122. FIG. 2B is a side perspective view of exemplary energy recovery wheel 122. FIGS. 2A and 2B will be discussed together. In the example depicted in FIGS. 2A-2B, energy recovery wheel 122 includes cassettes 128 and bearing plates 130. Energy recovery wheel 122 can be rotatable about a first axis, such as operational axis R-R.

Each cassette 128 includes a heat exchanger which allows energy recovery wheel 122 to transfer heat energy between two air sources. The two air sources can be, for example, outdoor air and return air. Cassettes 128 can be removable from energy recovery wheel 122, allowing for an individual cassette 128 to be serviced, replaced, or otherwise maintained. Energy recovery wheel 122 can be positioned so as to transfer heat between outdoor air and return air. This can be achieved by, for example, positioning energy recovery wheel 122 in both the outdoor air stream and the return air stream. Energy recovery wheel 122 can be rotated about operational axis R-R such that cassettes 128 are successively moved between the outdoor air stream and the return air stream. Each cassette 128 can thereby absorb heat from the warmer of the outdoor air stream and the return air stream and reject heat into the cooler of the outdoor air stream and the return air stream. For example, if the outdoor air is warmer than the return air, each cassette 128 can absorb heat from the outdoor air during the period of rotation when the cassette 128 is in contact with the outdoor air stream. The cassette 128 can then reject heat into the return air during the period of rotation when the cassette 128 is in contact with the return air stream. Energy recovery wheel 122 can be in heating mode when transferring heat energy from the outdoor air stream to the return air stream. Energy recovery wheel 122 can be in cooling mode when transferring heat energy from the return air stream to the outdoor air stream. When installed within a cabinet, such as cabinet 114 of FIG. 1B, energy recovery wheel 122 can be rotated about positional axis S-S via a bearing system that includes bearing plates 130.

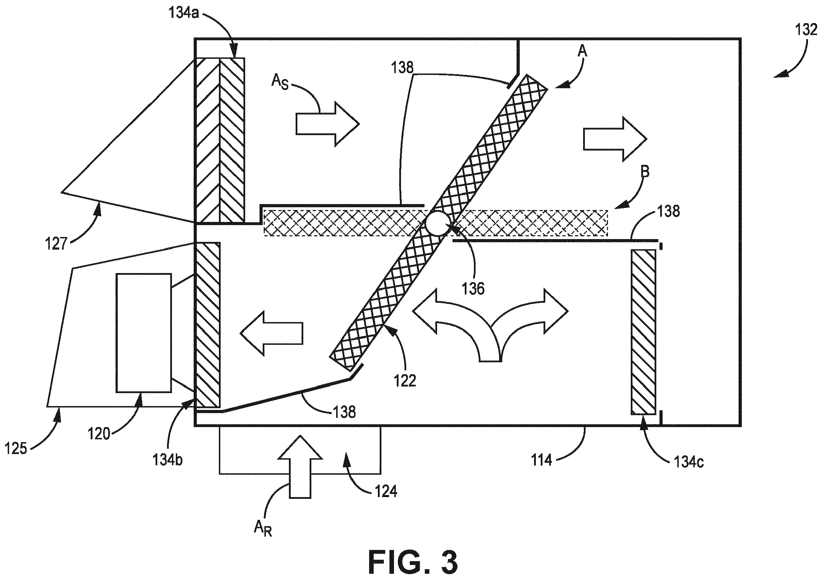

FIG. 3 is a schematic illustration of exemplary ERV system 132 within modified AC unit 100. As shown, ERV system 132 may include cabinet 114, supply fan 118 (not shown in FIG. 3), exhaust fan 120, energy recovery wheel 122, an energy recovery actuator, (not shown), a rotation actuator (not shown), and dampers 134a, 134b, and 134c. ERV system 132 can include bearing system 136 and a controller. Cabinet 114 can include walls 138 that define flow channels for outdoor air A_{S} and return air A_{R} such that outdoor air A_{S} can flow along an outdoor air path and return air A_{R} can flow along a return air path. Energy recovery wheel can be rotatable about a second axis of rotation, such as positional axis S-S. In the example depicted in FIG. 3, positional axis S-S is orthogonal to operational axis R-R. It should be understood that ERV system 132 includes the components of modified AC unit 100 which allow for heat energy transfer to take place.

Energy recovery wheel 122 can be positioned within cabinet 114 such that exhaust fan 120 is downstream of energy recovery wheel 122 with respect to the return air stream, and supply fan 118 (not shown in FIG. 3) is downstream of energy recovery wheel 122 with respect to the outdoor air stream. Supply fan 118 can be configured to draw a mix of outdoor air and return air through ERV system 132. The energy recovery actuator and the rotation actuator can be independent active motors. The energy recovery actuator can drive the rotation of energy recovery wheel 122 about operational axis R-R. The rotation actuator can drive the rotation of energy recovery wheel 122 about positional axis S-S. Damper 134a can control the flow of outdoor air into cabinet 114 through supply inlet 127. Damper 134b can control the flow of return air within cabinet 114 and can direct return air to flow out of cabinet 114 through return outlet 125. Damper 134c can control the flow of return air within cabinet 114 and can direct return air to flow through cabinet 114 so that the return air can be conditioned and exit cabinet 114 at supply outlet 126 as supply air. Dampers 134a-134c can be configurable to direct a flow of return air and a flow of outdoor air through ERV system 132 and cabinet 114. Dampers 134a-134c can be further configurable to vary the flow rate of outdoor air and/or return air flowing through ERV system 132 and cabinet 114, such that the mix of outdoor air and return air drawn by supply fan 118 is adjustable by the configuration of dampers 134a-134c. Bearing system 136 can be configured to allow energy recovery wheel 122 to rotate about positional axis S-S. Bearing system 136 can include bearing plates 130 (not shown in FIG. 3) and a number of bearings to facilitate the rotation of energy recovery wheel 122 about positional axis S-S. Bearing system 136, optionally, can include any other suitable rotation means, such as, for example, a turntable.

Energy recovery wheel 122 is rotatably mounted within cabinet 114 via bearing system 136. Energy recovery wheel 122 can be rotated about positional axis S-S between positions. In the example depicted, energy recovery wheel 122 can be rotated between an operational position, such as operational position A, and a bypass position, such as bypass position B. As described below, energy recovery wheel 122 can also have an operational mode and a bypass mode. These modes refer to the functioning of energy recovery wheel 122 during operation of modified AC unit 100.

Energy recovery wheel 122 can have an operational mode in which it exchanges heat between the outdoor air stream and the return air stream. This can be achieved by, for example, positioning energy recovery wheel 122 in both the outdoor air stream and the return air stream such that energy recovery wheel 122 is located in both the outdoor air path and the return air path, and each cassette 128 (shown in FIGS. 2A-2B) successively rotates between the outdoor air stream and the return air stream. In the depicted example, energy recovery wheel 122 is in operational mode when it is located in operational position A. The positioning of energy recovery wheel 122 in the operational position A allows for energy recovery wheel 122 to transfer heat energy and thereby to be in operational mode.

Energy recovery wheel 122 can have a bypass mode in which it does not exchange heat between the outdoor air stream and the return air stream. This can be achieved by, for example, positioning energy recovery wheel 122 out of one or both of the outdoor air stream and the return air stream such that energy recovery wheel 122 is positioned between the outdoor air path and the return air path. In the depicted example, energy recovery wheel 122 is in a bypass mode when it is located in bypass position B. The positioning of energy recovery wheel 122 in bypass position B allows for energy recovery wheel 122 to not transfer heat and thereby to be in bypass mode. It should be understood that energy recovery wheel 122 can be positioned between the outdoor air path and the return air path even when either outdoor air or return air is not actively flowing through ERV system 132 (i.e. when at least one of dampers 134a-134c is closed). In the depicted example, walls 138 of cabinet 114 define operational position A and bypass position B of energy recovery wheel 122 and allow for air stream separation to be maintained when energy recovery wheel 122 is in either of operational position A or bypass position B.

The controller can include a memory unit, one or more processors, and one or more communication devices. The memory unit can be configured to store information within the controller during operation, and can be a computer-readable storage medium which includes a nontransitory medium. The one or more processors can be configured to implement functionality and/or process instructions for execution within the controller. The one or more communication devices can be configured to communicate with external devices via one or more networks, such as one or more wireless or wired networks or both. The controller can optionally include components such as an input device, output device, sensor system, and/or power source.

The controller can be configured to receive and carry out instructions for the operation and configuration of components within modified AC unit 100. For example, the controller can be configured to select a position for each of dampers 134a-134c, thereby selecting a mode for modified AC unit 100 as described in more detail below. The controller can be further configured to select a mode of energy recovery wheel 122. For example, the controller can be configured to direct the rotation actuator to move energy recovery wheel 122 into operational mode from bypass mode, or vice versa. The controller can be configured to automatically detect conditions such as temperature and/or humidity inside and outside the building and carry out pre-determined instructions based on the detected conditions. Optionally, the controller can be configured to carry out instructions from a user.

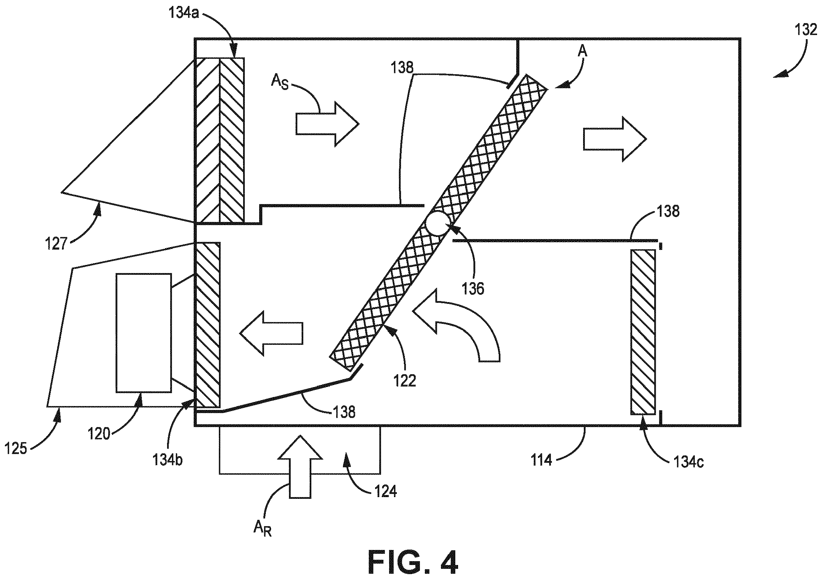

FIG. 4 is a schematic illustration of exemplary ERV system 132 in an energy recovery mode. As described in more detail below, modified AC unit 100 can be in either a mixed air mode or an outdoor air mode when ERV system 132 is in energy recovery mode. When ERV system 132 is in energy recovery mode, energy recovery wheel 122 is in an operational mode. While in operational mode, energy recovery wheel 122 can transfer heat between the outdoor air stream and the return air stream. FIG. 4 also depicts energy recovery wheel 122 in an operational position. In the operational position, energy recovery wheel 122 is positioned such that it is capable of transferring heat between the outdoor air stream and the return air stream. For example, the energy recovery wheel 122 may be positioned diagonally within cabinet 114 with respect to airflow through cabinet 114 as shown in FIG. 4, such that energy recovery wheel 122 is positioned in both the outdoor air path and the return air path. Dampers 134a-134c are open in the example depicted in FIG. 4.

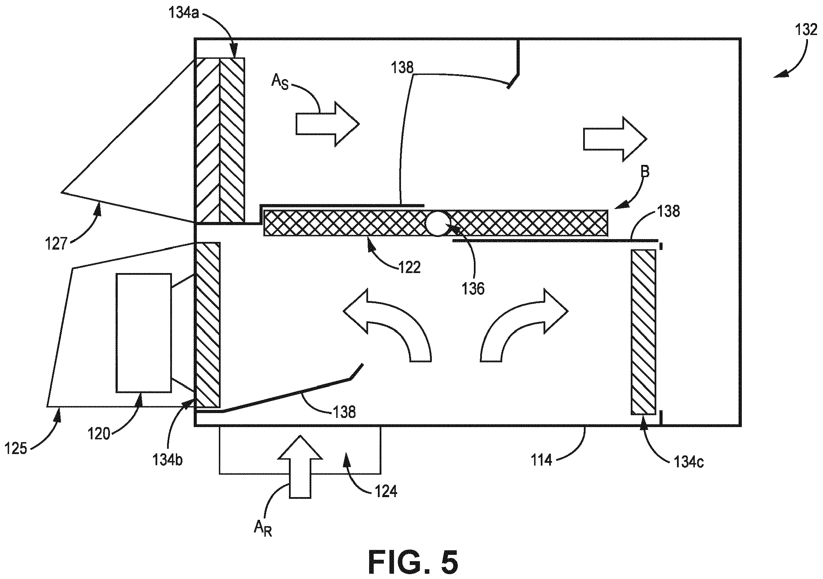

FIG. 5 is a schematic illustration of exemplary ERV system 132 while modified AC unit 100 (shown in FIG. 1B) is in a mixed air mode. FIG. 5 depicts energy recovery wheel 122 in a bypass mode such that it is not capable of transferring heat between the outdoor air stream and the return air stream. FIG. 5 also depicts energy recovery wheel 122 in bypass position B. For example, in bypass position B, energy recovery wheel 122 may be positioned horizontally within cabinet 114 with respect to the outdoor air path and the return air path as shown in FIG. 4. It should be understood that energy recovery wheel 122 can also be in operational position A and in operational mode while modified AC unit 100 is in mixed air mode. While ERV system 132 is not shown in an energy recovery mode in FIG. 5 due to energy recovery wheel 122 being in bypass position B and in bypass mode, ERV system 132 can be in energy recovery mode while modified AC unit 100 is in mixed air mode and energy recovery wheel 122 is in operational position A and in operational mode.

When modified AC unit 100 is in mixed air mode, all dampers 134a-134c are at least partially open. This allows both outdoor air and indoor return air to flow through cabinet 114. Dampers 134a-134c are configurable to allow varying flow rates of outdoor air and/or indoor return air through cabinet 114. For example, when modified AC unit 100 is in mixed air mode, some of dampers 134a-134c can be completely open, and others of dampers 134a-134c can be partially open. This configuration can be varied as desired based on conditions such as outdoor air temperature and/or humidity.

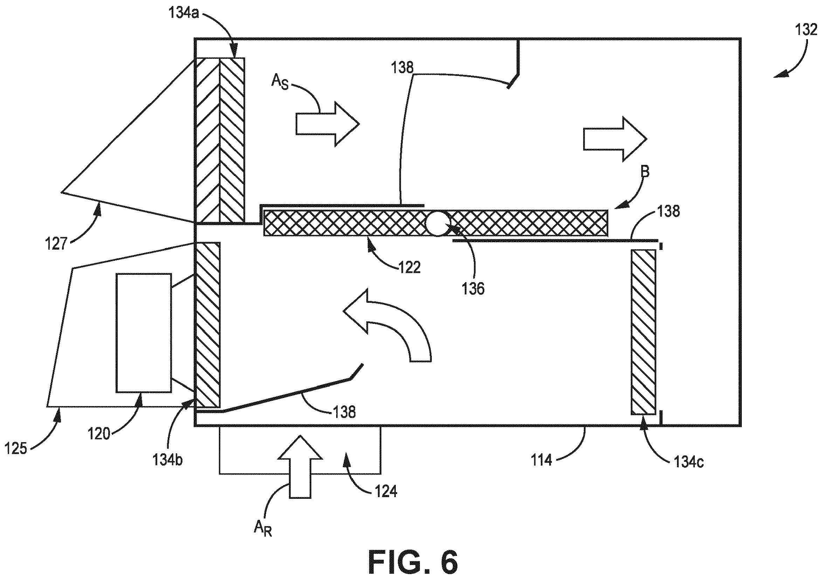

FIG. 6 is a schematic illustration of exemplary ERV system 132 while modified AC unit 100 (shown in FIG. 1B) is in an outdoor air mode. In the example depicted in FIG. 6, energy recovery wheel 122 is in bypass position B and in bypass mode. It should be understood that energy recovery wheel 122 can also be in operational position A and in operational mode while modified AC unit 100 is in outdoor air mode. While ERV system 132 is not shown in an energy recovery mode in FIG. 6 due to energy recovery wheel 122 being in bypass position B and in bypass mode, ERV system 132 can be in energy recovery mode while modified AC unit 100 is in outdoor air mode and energy recovery wheel 122 is in operational position A and in operational mode.

When modified AC unit 100 is in outdoor air mode, dampers 134a and 134b are at least partially open, and damper 134c is closed. This allows exhaust fan 120 to exhaust indoor return air and supply fan 118 to draw in outdoor air. The closing of damper 134c prevents indoor return air from flowing back through modified AC unit 100 and causes the adjustable mix of outdoor air and return air drawn by supply fan 118 to be all outdoor air.

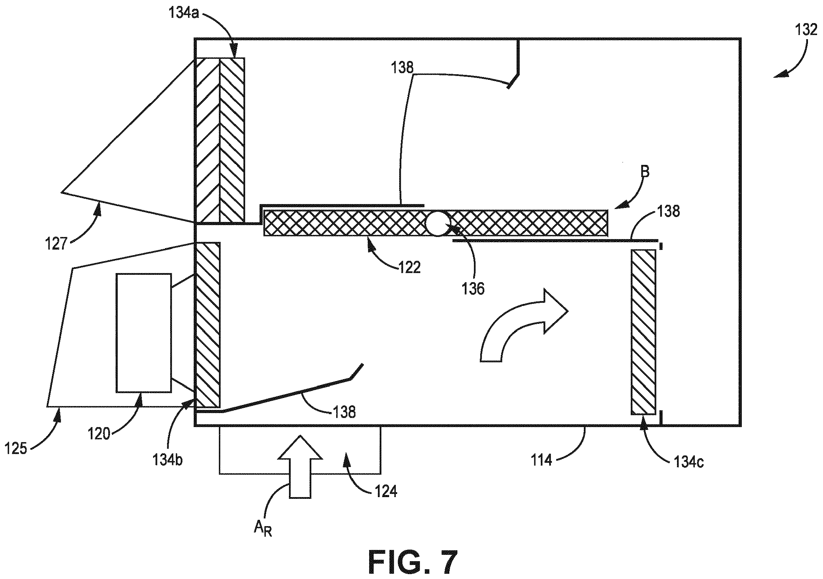

FIG. 7 is a schematic illustration of exemplary ERV system 132 while modified AC unit 100 (shown in FIG. 1B) is in a return air mode. In the example depicted in FIG. 7, energy recovery wheel 122 is in bypass position B and in bypass mode. Energy recovery wheel 122 can be in bypass mode when modified AC unit 100 is in return air mode because there is no corresponding flow of outdoor air for heat transfer.

When modified AC unit 100 is in return air mode, dampers 134a and 134b are closed and damper 134c is at least partially open. This allows only indoor return air to flow through modified AC unit 100 such that the mix of outdoor air and return air drawn by supply fan 118 is all return air. It should be understood that, because in most operating modes buildings typically require at least some ventilation with outdoor supply air, return air mode may be infrequently used, but the disclosed modified AC unit 100 is capable of operating in a return air mode. Return air mode can be used in situations where, for example, extreme outdoor temperatures make drawing in outdoor air undesirable (such as extreme cold).

Incorporating an ERV system with an energy recovery wheel into a modified rooftop air conditioning unit provides several advantages. An integral ERV system can capture heat energy which would otherwise be wasted and can improve energy efficiency, and an energy recovery wheel which can be rotated out of the way when not in use affords users flexibility. An energy recovery wheel which that is rotated out of the way when not in use (for example, when in the bypass mode disclosed in this application) prevents a pressure drop across the AC system. Finally, resizing and rearranging components within the AC unit can allow the size of the cabinet to remain the same as an old cabinet. This decreases the cost to replace the unit and makes replacement easier by allowing an old cabinet to be entirely replaced with a new modified unit containing the ERV system.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof, as defined by the claims. Therefore, it is intended that the invention not be limited to the particular embodiment(s) disclosed, but that the invention will include all embodiments falling within the scope of the appended claims.

## Claims

1. An energy recovery ventilator system (132) for a rooftop air conditioning unit (100), the rooftop air conditioning unit comprising a cabinet (114), the energy recovery ventilator system comprising:
an energy recovery wheel (122) which is rotatably mounted within the cabinet, wherein the energy recovery wheel is configured to transfer heat between an outdoor air stream and a return air stream when rotated into an operational position and is further configured not to transfer heat between the outdoor air stream and the return air stream when rotated into a bypass position; and
a controller which is configured to select the operational position of the energy recovery wheel and an operational mode of the energy recovery wheel.

2. The energy recovery ventilator system (132) of claim 1, further comprising at least one of:
an energy recovery actuator , wherein the energy recovery actuator is configured to rotate the energy recovery wheel (122) about an operational axis of rotation of the energy recovery wheel; and
a rotation actuator, wherein the rotation actuator is configured to rotate the energy recovery wheel about a positional axis of rotation of the energy recovery wheel which is orthogonal to the operational axis of rotation.

3. The energy recovery ventilator system (132) of claim 2, wherein heat energy is transferred through rotation of the energy recovery wheel (122) about the operational axis of rotation, thereby exchanging heat energy between the outdoor air stream and the return air stream.

4. The energy recovery ventilator system (132) of claim 2 or claim 3, further comprising:
a plurality of bearings; and
a plurality of bearing plates (130), wherein each of the plurality of bearings are configured to interface with each of the plurality of bearing plates to allow rotation of the energy recovery wheel (122) about the positional axis of rotation.

5. The energy recovery ventilator system (132) of any of claims 1 to 4, further comprising:
a supply fan (118), wherein the supply fan is downstream of the energy recovery wheel (122) with respect to the outdoor air stream and is configured to draw an adjustable mix of outdoor air and return air;
an exhaust fan (120), wherein the exhaust fan is downstream of the energy recovery wheel with respect to the return air stream and is configured to exhaust return air; and
a plurality of dampers (134a-134c), wherein the plurality of dampers is configurable to direct a flow of outdoor air and a flow of return air through the rooftop air conditioning unit (100).

6. The energy recovery ventilator system of any of claims 1 to 5, wherein the controller is further configured to select a bypass mode of the energy recovery wheel (122) and the bypass position of the energy recovery wheel.

7. The energy recovery ventilator system of any of claims 1 to 6, wherein the controller is further configured to select any of: an outdoor air mode of the rooftop air conditioning unit (100), a return air mode of the rooftop air conditioning unit, and a mixed air mode of the rooftop air conditioning unit.

8. The energy recovery ventilator system of any of claims 1 to 7, wherein the controller is further configured to select any of: a heating mode wherein the energy recovery wheel (122) transfers heat energy from the return air stream to the outdoor air stream; or a cooling mode wherein the energy recovery wheel transfers heat energy from the outdoor air stream to the return air stream.

9. The energy recovery ventilator system of any of claims 1 to 8, wherein the energy recovery wheel (122) further comprises a plurality of cassettes (128) which are configured to transfer heat energy between the outdoor air stream and the return air stream.

10. A rooftop air conditioning unit (100) comprising:
a cabinet (114); and
the energy recovery ventilator system (132) of any of claims 1 to 9.

11. A method of operating a rooftop air conditioning unit (100) comprising an energy recovery ventilator system (132), the method comprising:
configuring a plurality of dampers (134a-134c) to direct a flow of outdoor air and a flow of return air through the energy recovery ventilator system;
selecting, with a controller, an operational mode of an energy recovery wheel (122);
rotating the energy recovery wheel about a positional axis of rotation to position the energy recovery wheel in both an outdoor air path and a return air path to facilitate exchanging heat between an outdoor air stream and a return air stream, wherein the positional axis of rotation is orthogonal to an operational axis of rotation;
drawing, with a supply fan (118), a mix of outdoor air and return air through the energy recovery ventilator system; and
rotating the energy recovery wheel about the operational axis of rotation within a cabinet to exchange heat between the outdoor air stream and the return air stream.

12. The method of claim 11, further comprising:
selecting, with the controller, a bypass mode of the energy recovery wheel (122); and
rotating the energy recovery wheel about the positional axis of rotation within the cabinet (114) to position the energy recovery wheel such that the energy recovery wheel does not exchange heat between the outdoor air stream and the return air stream.

13. The method of claim 11 or claim 12, further comprising selecting, with the controller, an outdoor air mode of the energy recovery ventilator system (132), wherein selecting, with the controller, the outdoor air mode of the energy recovery ventilator system comprises configuring the plurality of dampers (134a-134c) to direct the flow of outdoor air through the energy recovery ventilator system such that the supply fan (118) draws outdoor air and an exhaust fan (120) of the energy recovery ventilator system exhausts return air.

14. The method of any of claims 11 to 13, further comprising selecting, with the controller, a mixed air mode of the energy recovery ventilator system (132), wherein selecting, with the controller, the mixed air mode of the energy recovery ventilator system comprises configuring the plurality of dampers (134a-134c) to direct the flow of outdoor air and the flow of return air through the energy recovery ventilator system such that the supply fan (118) draws outdoor air and return air.

15. The method of any of claims 11 to 14, further comprising selecting, with the controller, a return air mode of the energy recovery ventilator system (132), wherein selecting, with the controller, the return air mode of the energy recovery ventilator system comprises configuring the plurality of dampers (134a-134c) to direct the flow of return air through the energy recovery ventilator system such that the supply fan (118) draws return air.
